# Europäisches Patentamt

## European Patent Office

## Office européen des brevets

(19)

(11) Publication number: **0 080 278**
A1

(12) **EUROPEAN PATENT APPLICATION**

(21) Application number: **82305815.1**

(22) Date of filing: **02.11.82**

(51) Int. Cl.³: **H 02 P 7/28, B 60 L 11/18**

(30) Priority: **18.11.81 US 322540**

(43) Date of publication of application: **01.06.83**
Bulletin 83/22

(84) Designated Contracting States: **AT BE DE FR GB IT**

(71) Applicant: **Energy Development Associates Inc.,
1100 West Whitcomb Avenue, Madison Heights
Michigan 48071 (US)**

(72) Inventor: **Galloway, James Howard, 36511 Main Street,
New Baltimore Michigan 48047 (US)**

(74) Representative: **Milhench, Howard Leslie et al, A. A.
Thornton & Co. Northumberland House 303 High
Holborn, London, WC1V 7LE (GB)**

(54) **Device for controlling motor of electric vehicle.**

(57) A device for controlling the D.C. drive motor of a battery powered motor vehicle having an on-board storage battery, which motor has an armature and a separately excited field winding. This control device includes means for sensing the current flow (122) through the armature, means for creating an armature current signal indicative of the sensed armature current (124), means for creating a reference signal indicative of a desired speed of the vehicle (110), comparison means for creating an error signal indicative of the relationship between the armature current signal and the reference signal (120), means for controlling the voltage applied across the armature in accordance with the error signal (140) and means responsive to the error signal for varying the voltage across the field winding in accordance with the error signal when the error signal exceeds a preselected value (172). In this device there is provided an improvement including means for controlling the voltage across the field winding in accordance with the reference signal at least during a period that the error signal is below a preselected value. In this manner, the voltage applied across the field winding of the control device is controlled by the reference signal such as created by the position of the acceleration pedal in the motor vehicle.

- 1 -

## DEVICE FOR CONTROLLING
## MOTOR OF ELECTRIC VEHICLE

### Disclosure

The present invention relates to the art of electric powered motor vehicles and more particularly to an improved device for controlling the D.C. motor used in driving the wheels of such a vehicle.

### Incorporation by Reference

Incorporated by reference are United States Letters Patent 3,818,292; United States Letters Patent 4,260,938; and, pages 519-545 of a book entitled Electric and Hybrid Vehicles by M. J. Collie and published apparently in 1979 by Noyes Data Corporation of Park Ridge, New Jersey. These three publications illustrate prior arrangements for controlling the D.C. motor of a vehicle driven by an on-board electric source. Also incorporated by reference is United States Letters Patent No. 3,935,024 for disclosure of an example of the type of storage battery employing the control device for a drive motor to which the present invention is directed.

- 2 -

## Background of Invention

In recent years there has been a tremendous worldwide effort to develop motor vehicles operated by a fuel other than a petroleum distillate. Such efforts have resulted in Hydrogen powered vehicles, steam powered vehicles and electric powered vehicles, the latter of which have been adopted as the most promising alternative to the normal gasoline consuming internal combustion engines. With the adoption of the electric motor vehicles as the proposed answer to such a crucial problem, there has been a need to develop an on-board source of electric power. Since fuel cells, nuclear generators and other systems have not been perfected to a degree which allows their immediate use on motor vehicles, most developmental efforts in commercializing electric powered motor vehicles now involve the use of storage batteries carried by the vehicle. For that reason, various types of storage batteries have been developed with the objective of increasing the range between charging, without sacrificing the operating speed and/or decreasing the time and effort required in actually charging the on-board storage battery. This objective has now been generally satisfied by a zinc-chloride battery of the type commercialized by Energy Development Associates and generally disclosed in United States Letters Patent No. 3,935,024. This patent is incorporated by reference herein as background information regarding the power supply or main storage battery used on the vehicle employing the present invention. When employing a zinc-chloride battery, a plurality of cells are combined to create a source of direct current voltage having a voltage level sufficient to drive efficiently the motor used in propelling the vehicle. In practice, the zinc-chloride battery has a normal operating voltage of 120 volts D.C. This voltage is applied to

- 3 -

the storage battery during a charging operation and it is created by the battery during the normal discharging or driving of the vehicle. Consequently the basic on-board power supply of a motor vehicle of this type has an available main voltage level, which in practice, is 120 volts D.C. This allows efficient operation of a D.C. drive motor which is to be controlled by a device constructed in accordance with the present invention.

A substantial amount of effort has been devoted to the control circuit or device for the D.C. drive motor of the type mentioned above. Such a control device or circuit must allow the vehicle to respond by use of a D.C. drive motor, in a manner similar to an internal combustion engine. To accomplish this correlation between the operation of an electric powered vehicle and a normal internal combustion engine powered vehicle, the D.C. drive motor of the electric vehicle must respond rapidly to the position of a foot operated acceleration pedal. With the amount of work being directed to perfecting electric vehicles, the control of D.C. drive motors has been refined. Such devices now generally employ duty cycle choppers to control power to the motor. In the more sophisticated control devices or circuits, the D.C. motor has a circuit for separately exciting the armature and the field winding. Thus, each of these two coacting components of the D.C. drive motor can be excited in accordance with a desired plan as set forth by the parameters of the control device or circuit.

In one of the more widely accepted devices for controlling a D.C. motor used to drive an electric powered motor vehicle, there is provided an arrangement for sensing the armature current. A reference signal from the accelerator pedal position is compared to the signal from the actual armature current to provide a feedback error which controls the voltage applied across the armature. This acts in a manner similar to a servo-motor. The armature voltage is controlled by a duty cycle oscillator wherein the frequency or pulse width or both changes the average voltage in relation to the error signal. During this low speed stage of operation, the separately excited field winding is held at maximum voltage by a separate chopper including a duty cycle control. When the error signal indicates a demand for more armature current, when the voltage applied by the chopper to the armature is at its maximum level, the field current is reduced by reducing the voltage across the field. This allows the armature current to increase further in accordance with the error signal. In this manner, as the speed of the motor increases, the armature current itself can increase by reducing the field voltage. This type of circuit has disadvantages. While the field voltage is at its maximum level, a substantial amount of energy is lost in the field winding as heat energy. Thus, since the total heat loss is a factor of the square of the armature current and the square of the field current, high losses are created in the field at low speeds and in the armature at high speeds. These losses are minimized somewhat by the use of choppers to control the average voltage; however, there is still a need to decrease the heat losses within the D.C. motor to optimize the range of the electric vehicle and increase the life of the motor. Torque of the motor is controlled by the armature current. This current varies in accordance with the previously mentioned reference signal as controlled by the position of the accelerator pedal. Consequently, the torque is not accurately controlled with devices now using a separately excited armature and field winding.

## The Invention

In accordance with the present invention there is provided an improvement in the control circuit or device for the D.C. motor of an electric powered motor vehicle. This improvement involves an arrangement for controlling the voltage across the field winding in accordance with the reference signal at least during the period when the normal error signal is below a preselected value. This value is the normal switch-over value between low speed and high speed operation of the motor control circuit or device.

In accordance with another aspect of the present invention there is provided a summing circuit with a summed output and first and second inputs wherein the first input is controlled by the error signal and the second input is controlled by the pedal established reference signal. The summed output is used to control the field winding by controlling the duty cycle chopper in accordance with standard practice for using a chopper to control a D.C. motor.

In accordance with another aspect of the present invention there is provided a device for controlling the D.C. motor in accordance with the desired speed of the motor as indicated by a reference signal. This device controls the motor by controlling the voltage across the field winding in accordance with the reference signal at least during the period of time when the error signal is below a preselected value.

In accordance with still a further aspect of the present invention, there is provided a method of controlling the D.C. drive motor of a battery powered motor vehicle having an on-board storage battery wherein the motor has an armature and a separately excited field winding. This method includes the steps of sensing the current flow through the armature, creating an armature current signal indicative of the sensed armature current, creating a reference signal indicative of a desired speed of the vehicle, creating an error signal indicative of the relationship between the armature current signal and the reference signal, controlling the voltage applied across the armature in accordance with the error signal, varying the voltage across the field winding in accordance with the error signal when the error signal exceeds a preselected value and controlling the voltage across the field winding in accordance with the reference signal at least during a period when the error signal is below such preselected value.

In accordance with still a further aspect of the present invention, there is provided an improved device for controlling the D.C. drive motor of a battery powered motor vehicle by providing control means for modifying the voltage across the field winding by the reference signal created by the accelerator pedal.

Still a further aspect of the present invention is the provision of a control device, as mentioned above, which control device has means for controlling the voltage across the field winding in response to the normal reference signal available at the output of a position sensor at the accelerator pedal.

By using the present invention, the control device for the D.C. motor functions by controlling the armature current in a manner whereby the field voltage is proportional to the reference signal indicative of the position of the accelerator pedal. In the low current range of 0-250 amperes, the field voltage, in accordance with the present invention, is increased proportionate to the current reference as sensed by the position of the accelerator pedal. The voltage increases from about 30 volts to fully ON in accordance with the position of the pedal as indicated by a somewhat normal reference signal. In this manner, the torque on the motor at low speeds increases as the square of the armature current, like in a series D.C. motor. In the past, the torque was increased proportionate to the change in armature current since the field winding was normally held at maximum voltage during low speed operation. By providing the field voltage proportional to the pedal position at low speeds, the torque is proportional to the square of the current for low speed operation of the electric powered vehicle. The field current and armature current are both controlled by the reference signal during low speed operation, as well as during high speed operation. This results in a fine control over the vehicle for low speed maneuvering and a smoother feel to the drive. The ratio of the currents is proportional to the square root of the resistances through the armature and field winding to minimize the total electrical loss of the system.

As the speed increases, the field winding voltage is then reduced in accordance with somewhat standard practice to control the armature current. This standard field reduction control function, i.e., reducing the field voltage to increase the armature current, provides an arrangement wherein the field can cause regeneration by providing a continuous control over the field even by a negative current level as a reference signal. Consequently, the pedal can be used to control negative braking by requesting a negative current from the armature. Thus, control over the field voltage in accordance with the reference signal can be continuous although it is ultimately controlled in accordance with the error signal when the voltage across the armature is increased to a maximum at higher speeds.

The primary object of the present invention is the provision of an improved control device for the D.C. drive motor of a battery powered motor vehicle, which control device decreases the heat losses in the motor, increases the control at low motor speeds, and provides smooth operation in response to the position of the accelerator pedal of the vehicle.

Still a further object of the present invention is the provision of an improved control device, of the type described above, which control device controls the voltage across the field winding of the D.C. motor in accordance with the reference signal from the accelerator pedal of the vehicle.

Another object of the present invention is the provision of an improved control device, of the type defined above, which control device proportions the armature current and field current generally in accordance with the armature resistance and the field resistance. In this manner, an optimum heat loss is realized, especially at low speeds.

Yet another object of the present invention is the provision of an improved control device, as defined above, which improved control device continuously controls the voltage across the field winding in accordance with the reference signal, as created by the accelerator pedal, so that voltage across the winding follows the reference signal. This is modified when the error signal normally used in controlling the armature voltage exceeds a certain value which is indicative of the fact that the armature voltage is at its maximum level. This occurs at higher speeds when low torque is required and control of the armature current is taken over by varying the field voltage.

These and other objects and advantages will become apparent from the following description taken together with the accompanying drawings.

## Brief Description of the Drawings

In this disclosure, the following drawings are employed to disclose the preferred embodiment of the invention and its operating characteristics:

FIGURE 1 is a side view of a motor vehicle employing a zinc-chloride type of battery to which the present invention is particularly directed;

FIGURE 2 is a schematic, pictorial view showing the battery as employed in the vehicle of FIGURE 1 together with the arrangement of various plumbing;

FIGURE 3 is a schematic, cross-sectional view and flow chart showing a battery of the type used in the vehicle of FIGURE 1 and operating in the charging mode;

FIGURE 4 is a schematic view showing the components of the D.C. motor as controlled in accordance with the preferred embodiment of the present invention;

FIGURE 5 is a combined wiring diagram and block diagram illustrating the preferred embodiment of the present invention; and,

FIGURE 6A-6H are detailed wiring diagrams of the device shown in FIGURE 5 and to be taken together as a single unit which illustrates the various electrical components employed in the preferred embodiment of the present invention to obtain the results described in accordance with the preferred embodiment of the invention as shown in FIGURE 5.

## Preferred Embodiment

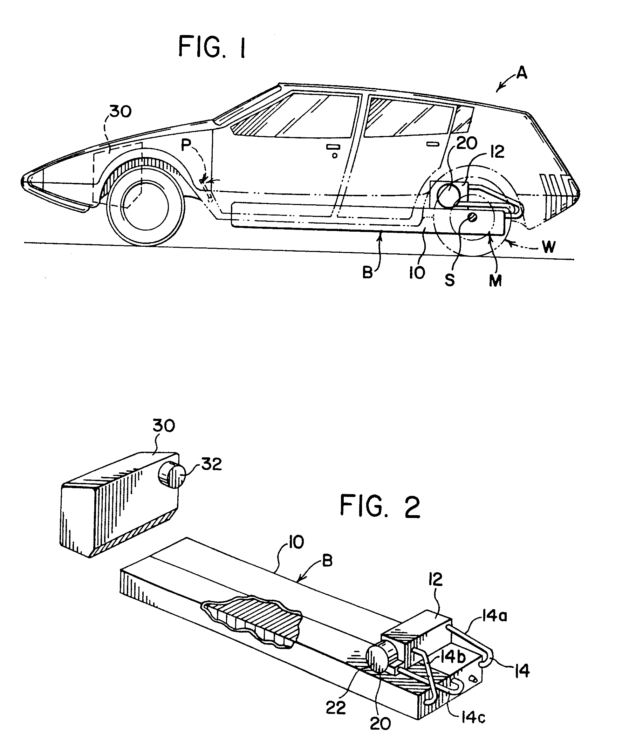

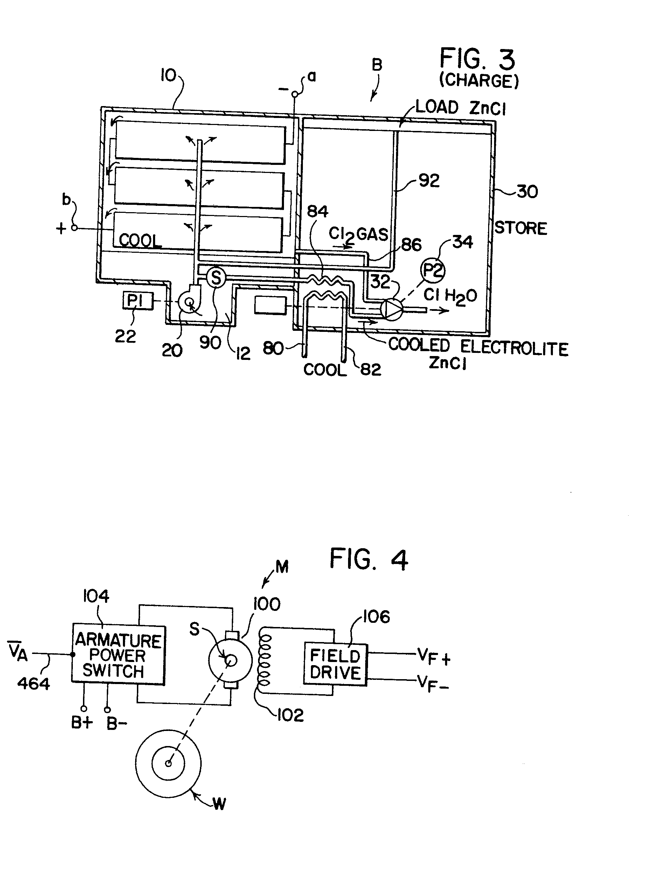

Referring now to the drawings wherein the showings are for the purpose of illustrating a preferred embodiment of the invention only and not for the purpose of limiting same, FIGURES 1-3 show an electric powered motor vehicle A driven by storage battery B of the zinc-chloride type, generally shown in United States Letters Patent No. 3,935,024, incorporated by reference herein. This type of battery is manufactured by/or for Energy Development Associates and has a substantially greater driving range between charges than other batteries being suggested for use in electric powered motor vehicles. This zinc-chloride battery is now being considered as a power source for electric powered motor vehicles, such as Vehicle A. A zinc-chloride battery or similar battery includes a stack portion 10 containing the electric cells and a reservoir or sump 12 for storage of electrolyte. Piping 14, including return pipes 14a, 14b and pressure lines 14c, is employed for circulating electrolyte by pump 20, driven by motor 22. Storage tank 30 for chloride-hydrate is connected by an appropriate gas line, not shown, and includes an internal pump 32 for moving gaseous material between stack 10 and tank 30 during charging and discharging of the battery B. Pump 32 is driven by motor 34. As so far described, battery B of vehicle A is a standard zinc-chloride battery having, in the preferred embodiment, two groups of thirty cells, each of which produces approximately 2.0 volts D.C. Thus, the output across battery leads a, b, in practice is approximately 120 volts D.C. Of course, various voltages could be obtained by different numbers of battery cells in stack 10. This type of storage battery is charged in accordance with the arrangement schematically illustrated in FIGURE 3, wherein a zinc-chloride battery is selectively connected to an external power source or supply of 120 volts D.C. across terminals a, b. During the charging mode, pumps 20, 32 are driven by D.C. motors 22, 34, respectively. This circulates electrolyte through stack 10 and pumps chlorine, by gas pump 32, into the storage tank 30. Chlorine-hydrate is formed in tank 30 due to the chilling action of the by-passed electrolyte which is cooled by an external coolant circulated through lines 80, 82. Electrolyte is drawn into pump 32 through line 84 which is illustrated as being undulated to facilitate cooling of the chlorine passing through the adjacent line 86 into pump 32. Solenoid 90 is actuated to bleed or by-pass a small amount of electrolyte through line 84 for chlorine-hydrate formation at pump 32. The chlorine-hydrate is stored in tank 30 for use during the discharge or normal operating mode of battery B.

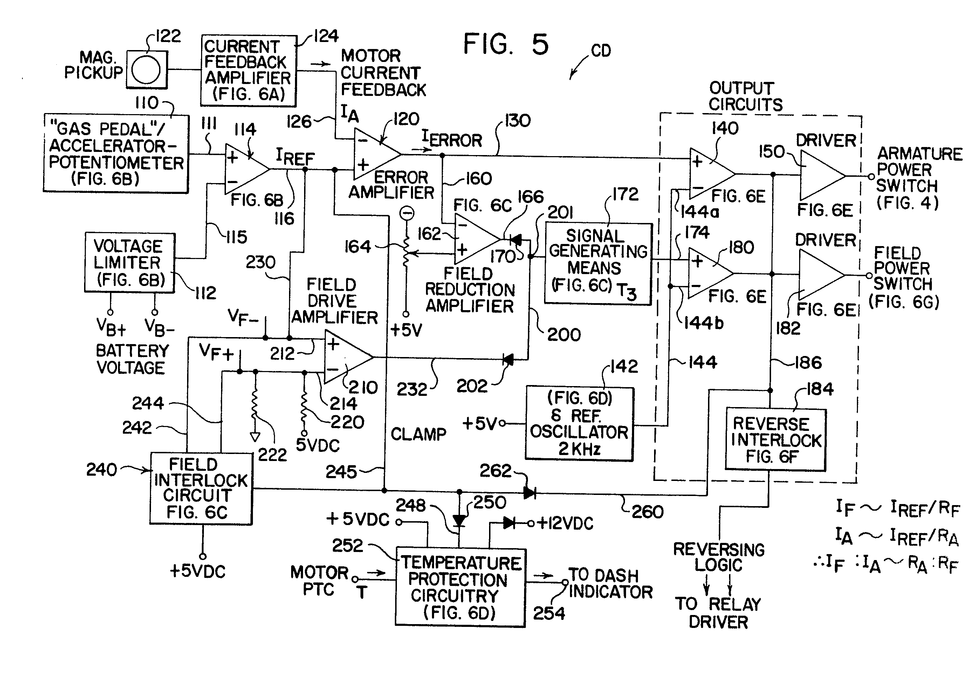

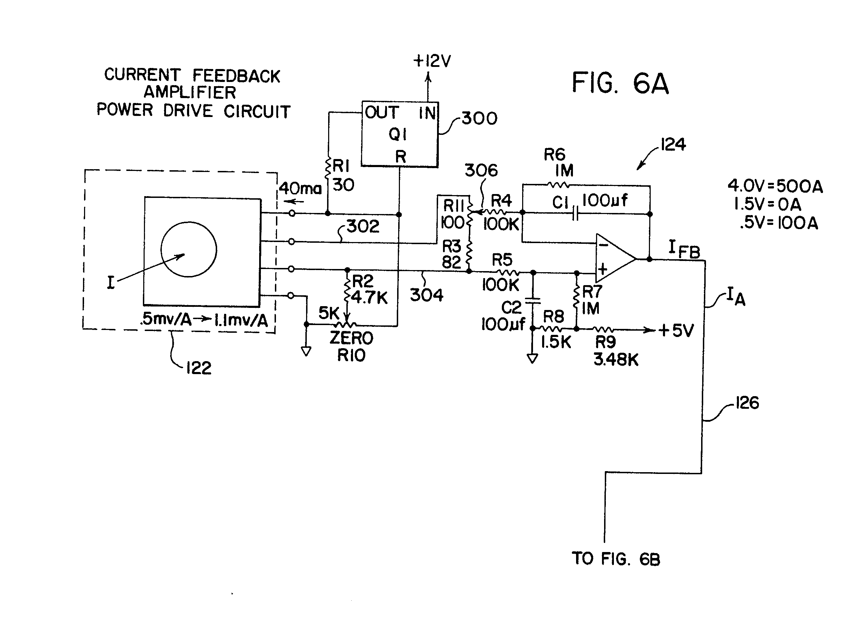

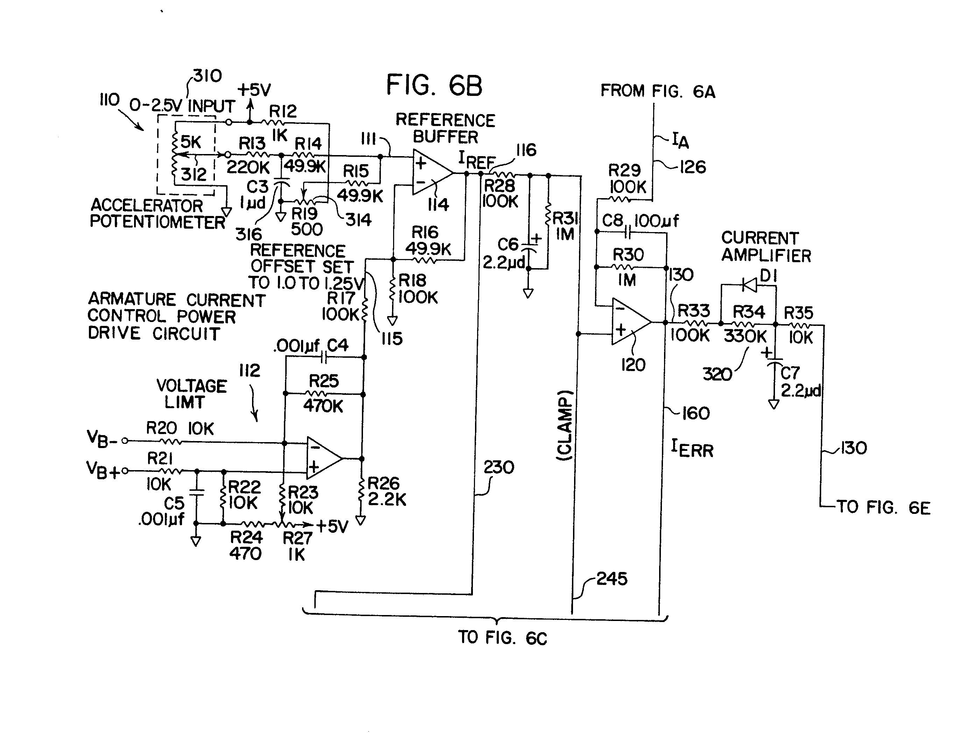

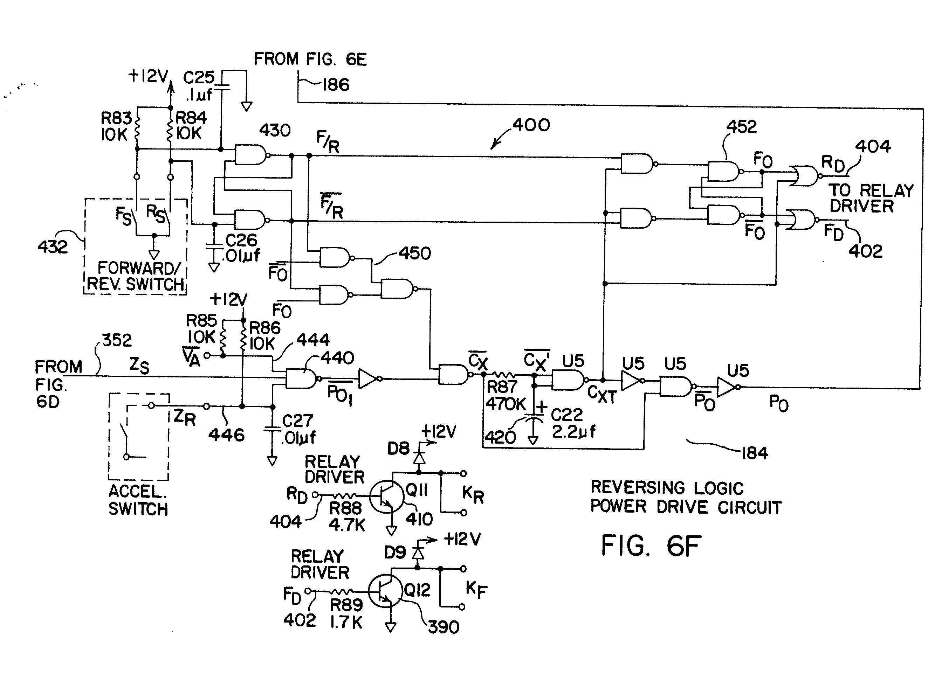

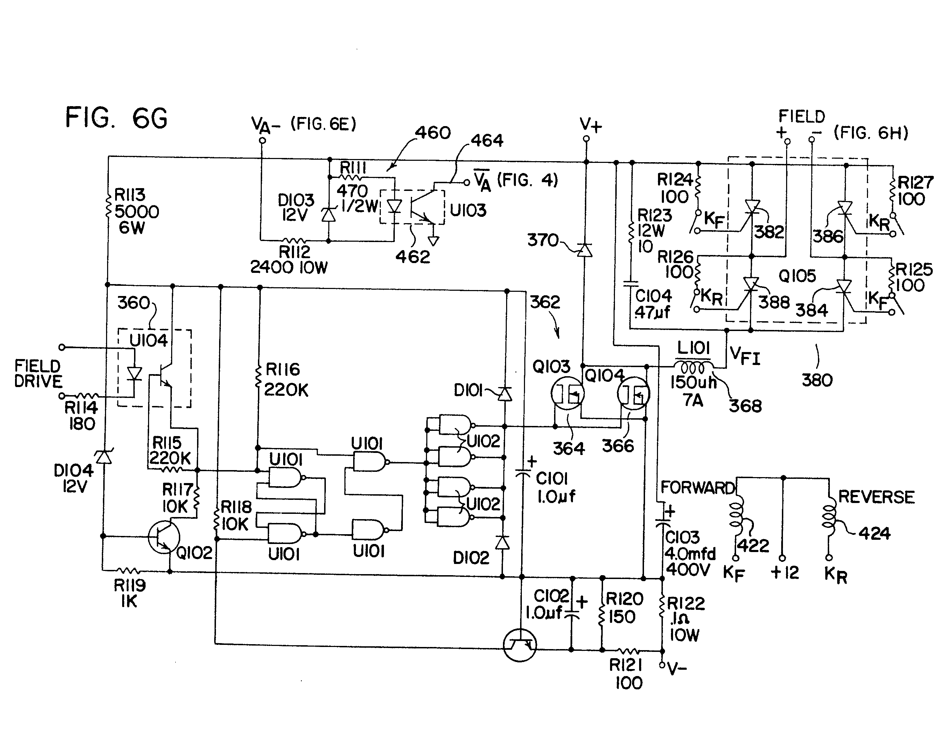

Referring now to FIGURE 1, the D.C. drive motor M is used to drive wheels W through output shaft S. The basic components of motor M are illustrated in FIGURE 4 wherein motor M includes a standard armature 100 and a field winding 102. The armature is controlled by power switch 104 which, in practice, includes a pair of commercially available Darlington transistor assemblies rated at 200 amps each on a continuous basis. These power transistors are allowed to carry a total of 450 amperes during acceleration of motor M in accordance with the position of pedal P, as shown in FIGURE 1. As will be explained later, power switch 104 is operated by a chopper with 2.0 KHz modulation so that armature losses are reduced. Field winding 102 is controlled by field drive 106 which is operated through a pair of field effect transistors, as shown in FIGURE 6G. These field effect transistors can be operated at higher frequency than the 2.0 KHz modulation used for armature switch 104; however, the frequency of 2.0 KHz is sufficient because the time constant of the field is significantly greater than the time constant of the armature. This is standard in D.C. drive motors. To reverse the drive of wheels W by motor M, polarity across field drive 106 is reversed in a manner to be described in more detail later and shown generally in FIGURES 6F and 6G. Armature 100 and field 102 are separately excited and controlled in accordance with the improved control system schematically illustrated in FIGURE 5 and shown in detail in FIGURES 6A-6H.

In FIGURE 5, the preferred embodiment of the present invention is described with respect to detailed circuitry illustrated in detail in FIGURES 6A-6H. These details are provided herein for the purposes of disclosing the various parameters as illustrated in the figures; however, the invention can be understood only with reference to FIGURE 5. Motor control device CD is a modification of a somewhat standard type of motor control for a D.C. motor of the type used in driving an electric powered motor vehicle. This motor, as previously mentioned, includes an armature 100, a field winding 102, armature power switch 104 and a field drive 106. The gas pedal or accelerator P

GE2-6686

0080278

-11-

controls circuit 110 to create a voltage level in line 111 which is proportional to the desired speed of motor M. An appropriate voltage limiter 112 is provided to prevent overloading of battery B if an excessive demand is indicated in line 111. This bias from voltage limiter 112 is directed to amplifier or comparator 114 by line 115. The signal in line 116 is the reference signal controlled by the position of accelerator pedal P, as shown in FIGURE 1. This reference signal, which is indicative of the desired operation of motor M at any given time, is directed to the non-inverting input of an error amplifier 120. The other input is controlled by a magnetic pick-up 122 which, in practice, is a Hall Effect transducer having an output indicative of current flowing through armature 100 of motor M, as shown in FIGURE 4. Amplifier 124 amplifies the output from pick-up or sensor 122 to produce a signal in line 126 which is indicative of the actual current in armature 100. This actual current signal in line 126 is compared to the reference signal in line 116 by an error amplifier 120 having an output 130 which carries the error signal indicating the difference between the signal representing the desired current (I REF) and the signal representing the actual current (IA). The error signal in line 130 controls the width of pulses from chopper 140 having an input from 2.0 KHz oscillator 142 and another input controlled by line 130. The level of line 130 controls the chopper including amplifier 140 to control the output of armature driver 150. This driver controls power switch 104, as shown in FIGURE 4. By utilizing amplifier 140 and driver 150 as a chopping circuit controlled by oscillator 142, the output through armature power switch 104 is adjusted in accordance with the error signal in line 130. As the error signal increases, the voltage applied across the armature increases. This can occur until the voltage available to power switch 104, which is essentially the voltage of battery B, reaches a maximum level. At that time, an increased error signal cannot cause an increased armature current by itself.

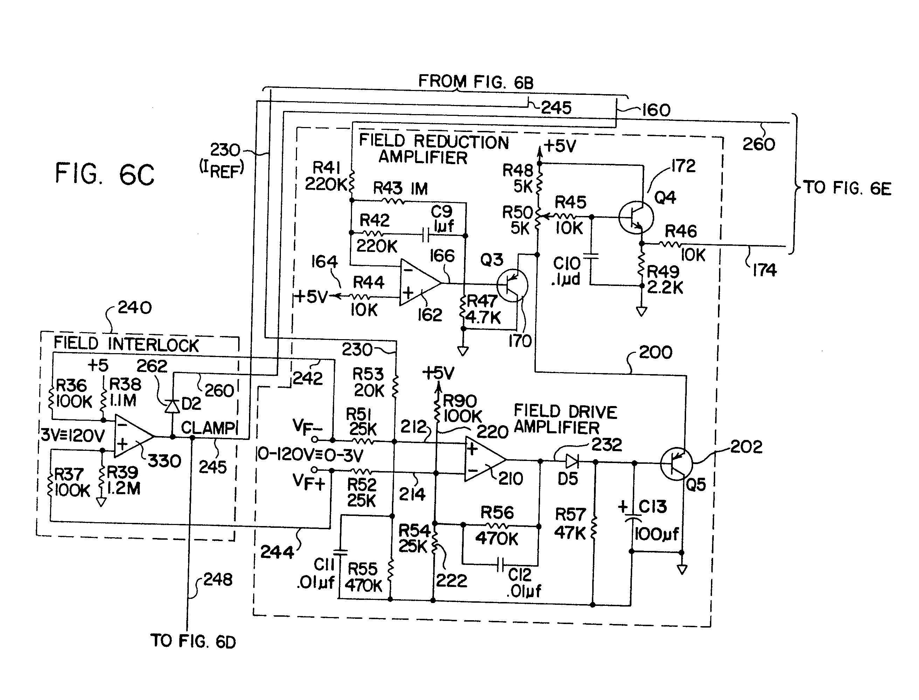

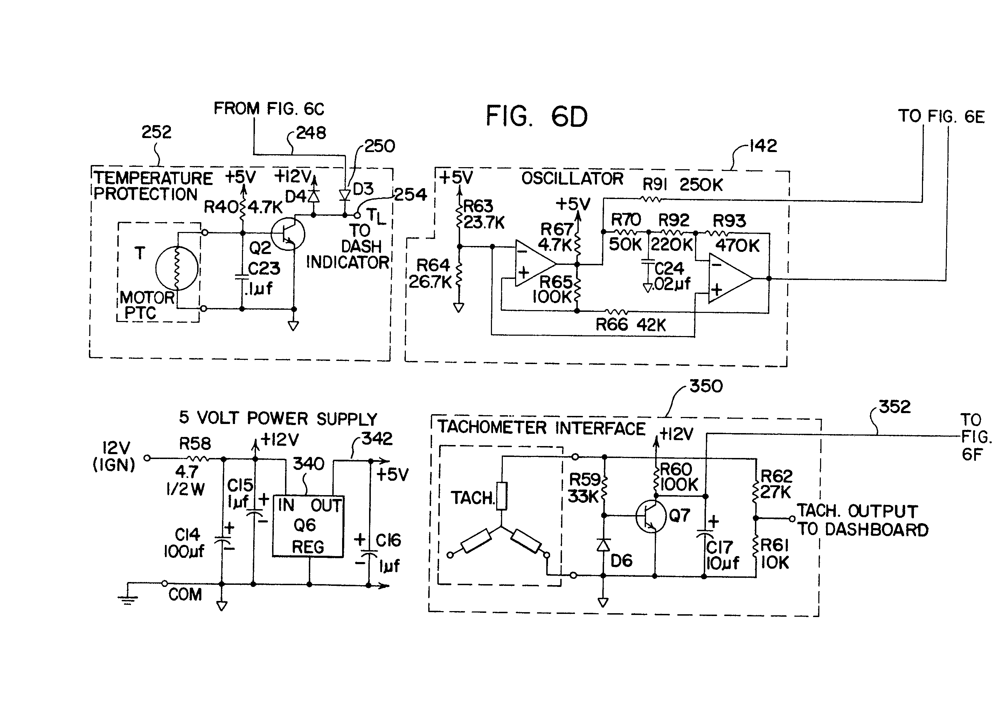

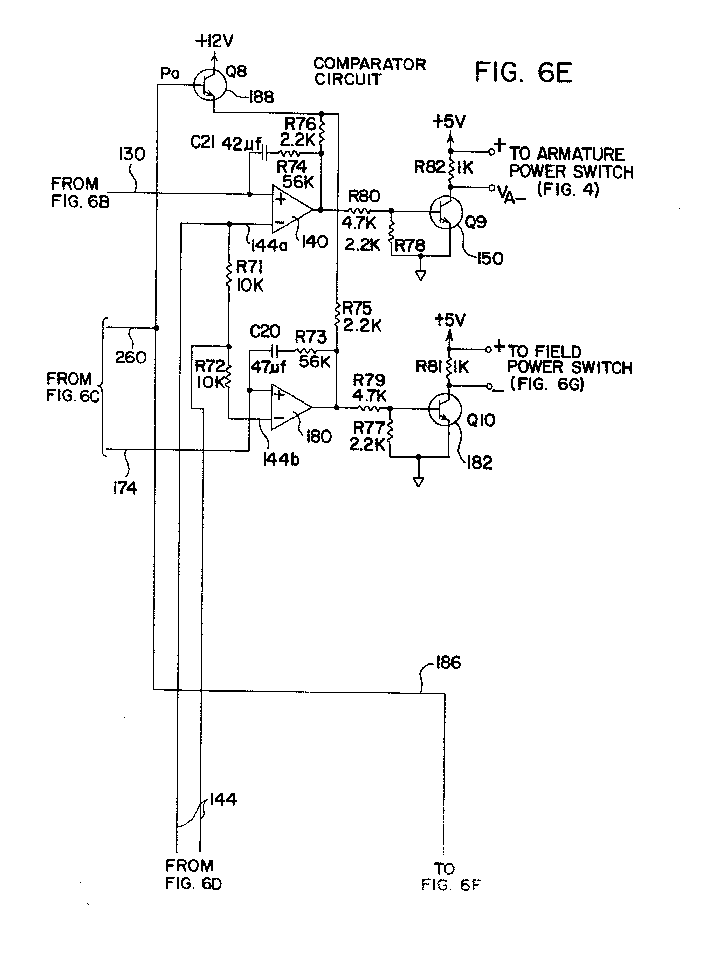

Thus, the motor control circuits of the type to which the present invention is an improvement also includes an arrangement for reducing the current flow or voltage across the field winding after the armature has been saturated. This is done by directing the error signal of line 130 through line 160 to a field reduction amplifier 162. In this manner, the error signal in line 160 is compared with a preselected value, which is adjustable by pot 164. An output in line 166 is created through forward biasing diode 170 when the preselected value, as set by pot 164, has been exceeded by the error signal in line 160. Diode 170, which is a transistor circuit as shown in FIGURE 6C, controls a signal generating means 172 having an output 174 which is directed to the input of amplifier 180, similar to previously discussed amplifier 140. Oscillator 142 drives lines 144, one of which is labeled 144a and the other of which is labeled 144b. These lines are connected, respectively, to amplifiers 140, 180 so that the outputs of these amplifiers are modulated and controlled by the output of oscillator 142. As previously mentioned, in practice, this oscillator operates at a frequency of approximately 2.0 KHz. Amplifier 180, which combines with driver 182 to provide a chopper effect, applies a voltage across field 102 as shown in FIGURE 4. The output of driver 182 is directed to a power switch for the field winding which switch is shown in FIGURE 6G. The output of the switch ultimately controls the field drive circuit 106 as shown in FIGURE 4. As indicated, the voltage to the armature power switch and the voltage to the field power switch is pulsated at a rate determined by oscillator 142. The width of each pulse is controlled by the level of the signal in lines 130, 174. Thus, drivers 150, 182 are duty-cycle controlled to change the average voltage across the armature or the field winding.

As so far described, control device CD, as shown in FIGURE 5, is somewhat standard. As the reference signal changes in line 116, a feedback loop including line 126 and amplifier 120 attempts to minimize the error signal in line 130 by changing the effective or average voltage across the armature of motor M. When this feedback loop is insufficient, the error signal in line 130 increases. When it reaches a preselected value, indicative of full voltage across the armature, the field reduction amplifier 162 is energized so that the error as sensed by line 160 controls the voltage on line 166. This, in turn, controls the output of amplifier 180 to reduce the voltage across field winding 102. This reduction decreases the field current and thus increases the armature current in accordance with the increased error signal.

In accordance with the present invention, the control device as previously discussed includes an arrangement for controlling signal generating means 172 and, thus, the level of the field voltage on a continuous basis in accordance with the level of the reference signal in line 116. This is accomplished by summing the signal on line 200 with the output of field reduction amplifier 162 at summing point 201. Signal generating means 172 is, in accordance with the present invention, controlled by the error signal in line 130 and the reference signal in line 116. To accomplish modification of the signal in line 200 by the reference signal in line 116, in practice, diode 102 connects the output of a field drive amplifier 210 with summing points 201. The field drive amplifier has inputs 212, 214. Input 214 is connected to the positive side of the field winding which is clamped between a fixed voltage illustrated as 5.0 volts D.C. and a chassis ground. This clamping is through resistors 220, 222. Thus, control of amplifier 210 is essentially by line 214 which is connected to the negative side of the field winding. The reference signal controlled by pedal potentiometer 110 is directed through line 116 to line 230 so that the second input 212 of amplifier 210 is

-14-

controlled by the reference signal. Output 232 of amplifier 210 is connected to the anode of diode 202 for controlling circuit 172 directly by the reference signal. As indicated in the lower righthand corner of FIGURE 5, the use of the present invention, as so far described, allows the field current and the armature current to both vary in accordance with the reference signal. Thus, each of the currents increase and decrease in accordance with the level of the reference signal at the output of amplifier 114. This correlation of both currents occurs at low speeds so that motor M acts as a series motor and the torque is proportional to the square of the armature current. This square function occurs because both the winding and the armature follow each other in accordance with the level of the reference signal in line 116. This continues until a signal is reached to allow forward bias of diode 170 so that the error signal in line 160 is summed with the reference signal control of line 200. This occurs when the feedback loop including amplifier 124 can no longer increase the armature voltage to produce an increased armature current. In accordance with the invention, the reference signal controls the voltage in line 232 continuously. During low speed operation, the current in the armature and in the field increases proportionate to the respective resistances. Other arrangements could be devised for allowing the field winding to follow the reference signal, at least during low speed operation of motor M, without departing from the intended scope of the present invention. By using a 2.0 KHz oscillator to modulate both the armature drive circuit and the field drive circuit, each of the drive circuits responds as if there were continuous voltage at the desired levels controlled by the signals in lines 130, 174.

In accordance with the preferred embodiment of the present invention, the system as so far described, which includes the present invention, is provided with various interlock systems which are shown in detail in FIGURES 6A-6G. Since these interlocks do not form a part of the present invention but are illustrated for the purposes of indicating the preferred embodiment, their operations will be described briefly with respect to the showings in FIGURE 5. A field interlock circuit 240, best shown in FIGURE 6C, is driven by the field voltage through lines 242, 244. As the field voltage approaches zero, a clamp voltage is applied at the output of interlock 240. This clamp voltage in line 245 prevents the operation of amplifier 120 by reducing the error in line 130 to a zero demand for the armature. Thus, as the field voltage approaches zero the armature drive is terminated to prevent a over-speed condition. In practice the clamp voltage is a grounded conduction.

Line 145 is also controlled by the logic on line 248 connected through a diode 250 to a temperature protection circuit 252, best shown in FIGURE 6D. If the motor temperature exceeds a preselected level, diode 250 is forward biased to ground line 248. This grounds clamp line 245 in a manner similar to the field interlock circuit 240 so that line 130 cannot demand voltage across the armature. Thus, line 245 is clamped to a ground condition whenever the field voltage approaches zero or the temperature of the motor exceeds a certain level. These two conditions are used to control a dash indicator by terminal 254, as shown in FIGURE 6D. The clamp by either the voltage of the field decreasing to approximately zero or an increased motor temperature also produces the voltage in line 260 through diode 262. Thus, drivers 150, 182 are also turned off through line 186 which is the output of a reverse interlock 184 as best shown in FIGURE 6F. This reverse interlock creates a signal in line 186 which operates transistor switch 188 as shown in FIGURE 6E to turn off drivers 150, 182. The reverse interlock 184 is somewhat standard and creates a signal during the reversing operation so that the armature and winding are turned off until the reversing SCR's have been switched.

FIGURES 6A-6H illustrate the preferred embodiment of the invention where the components having the numbers previously described are employed. These drawings indicate the various capacitors, resistance and other parameters as employed in practice. Variations therein could be made. Although not necessary, certain aspects of the detailed drawings will be discussed. In FIGURE 7A, the Hall Effect device, or transducer, has a regulated input by standard integrated circuit 300 and a controlled voltage output across lines 302, 304. These lines control feedback amplifier circuit 124. A pot 306 can be used to modulate the output in line 226 in accordance with the desired calibrated armature current. Referring now to FIGURE 6B, the accelerator potentiometer includes a pot 310 having an adjustable arm 312 to produce a preselected level of voltage in line 111. Pot 314 controls the reference offset so that line 111 can request a braking action according to the position of the pedal which controls rheostat arm 312. Capacitor 316 prevents constant demand for regenative braking. The voltage limit circuit 112 monitors the voltage of battery B and limits the voltage to which the armature can be driven. The output of line 130 is directed through a current amplifier or output circuit 320. This output circuit does not affect the general operation of the signal in 130; therefore, the output of this circuit is also labeled 130. Referring now to FIGURE 6C, field interlock 240 includes a comparator 330 having its inverted input pulled toward a 5.0 volts D.C. and its non-inverting input clamped to ground. By applying the field voltage across lines 242, 244, comparator amplifier 330 produces the output signal which is essentially grounded when field voltage is reduced to a relatively low level. This grounding causes the clamping action previously described with respect to line 245.

In FIGURE 6D, four separate circuits are illustrated. Temperature protection circuit 252 and 2.0 KHz oscillator

-17-

242 have been previously described. The 5.0 volts power supply utilized in the control device is shown in the lower left hand corner wherein 12.0 volts D.C. is applied to the circuit when the ignition switch is actuated. This 12.0 volts D.C. is applied to the circuit when the ignition switch is actuated. This 12.0 volts D.C. voltage is applied through a standard voltage divider IC chip 340 to produce a 5.0 volts output in line 342. Also in FIGURE 6D there is a tachometer interface 350 having an output 352 which is at a logic 1 when the tachometer reads zero vehicle speed. In FIGURE 6G, the desired field voltage in the form of pulse size modulated pulses appears at the input of the optical coupler 360 which, in turn, controls the field voltage power switch 362 in the form of two FET power switches 364, 366. Inductor 368 and diode 370 allow current flow when the switches are turned off. Circuit 380 reverses the field and thus the motor in accordance with the operation of two sets of SCR's. The first set 382, 384 are actuated by closing switches $K_F$. This is the forward condition and is controlled by relay driver 390 shown in FIGURE 6F. When the reversing circuit 400 produces a forward signal in line 402 this closes relay driver 390 and activates SCR's 382, 384. In a like manner, a reversing signal in line 404, actuates relay driver 410 to activate SCR's 386, 388. As previously mentioned, a reverse interlock 184 creates a signal in line 186 which is held for a time determined by capacitor 420 so that the field and armature are disconnected when reversing circuit 380 is shifted between forward and reverse. Coils 422, 424 (FIGURE 6G) are the coils controlled by relay drivers 390, 410, respectively. Reversing circuit 400 has a flip-flop input 430 which is controlled by switch 432 to determine which of the outputs 402, 404 will be energized. Before these inputs can be changed, three conditons must exist at the input of NAND gate 440. A logic 1 must appear in line 352 which would

-18-

indicate that the vehicle is stopped. Line 444 must be a logic 1 which indicates that the armature voltage is off. The accelerator switch produces a logic 1 in line 446 to enable gate 440. When this happens, switch 432 may be actuated to change the voltage across the field winding to change the direction of movement of the vehicle. Logic network 450 is an interlock with network 452 so that this output circuit can be toggled when the appropriate position of switch 432 has been reached.

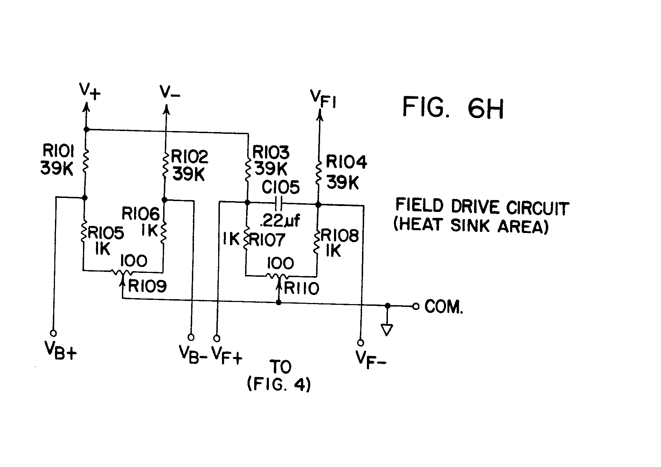

Referring again to FIGURE 6G, network 460 is used to connect driver 150 with power switch 104 in FIGURE 4. Optical coupling 462 is similar to optical coupling 360 and directs a voltage in line 464 to control the voltage level across the armature. FIGURE 6H is an interconnection between the output of field power switch and the field drive 106, as shown in FIGURE 4.

By employing the present invention, the field current is proportional to the pedal position of the motor vehicle A. Consequently, the electrical power is minimized since both the field current and armature current are regulated during low speed operation of motor M. Another advantage of the invention is that when the vehicle is stopped, the demand by a signal in line 116 is low. Consequently, the voltage across the field winding is also low. Since the field current is down and there is no demand from line 116 for armature voltage, the armature current also comes down with the field current. Since torque is a factor of the product between the field current and the armature current, the torque is substantially zero when the vehicle is stopped and low heat losses occur. This torque is rapidly increased as a square function by employing the present invention wherein both armature voltage and field voltage are moved together in accordance with the level of the reference signal in line 116.

Various well known D.C. motors could be controlled by control device CD; however, in practice, the device shown in FIGURES 6A-6H is used to control a D.C. motor manufactured by Siemens Corporation of West Germany model No. 1 GV1-161 rated at a continuous output of 17.0 Kw.

CLAIMS

1.    In a device for controlling the D.C. drive motor of a battery powered motor vehicle having an on-board storage battery, said motor having an armature and a separately excited field winding, said control device including means for sensing current flow through said armature; means for creating an armature current signal indicative of said sensed armature current, means for creating a reference signal indicative of a desired speed of said vehicle, comparison means for creating an error signal indicative of the relationship between said armature current signal and said reference signal, means for controlling the voltage applied across said armature in accordance with said error signal and means responsive to said error signal for varying the voltage across said field winding in accordance with said error signal when said error signal exceeds a preselected value, the improvement comprising: means for controlling the voltage across said field winding in accordance with said reference signal at least during a period when said error signal is below said preselected value.

2.    The improvement as defined in claim 1 including a summing circuit and first and second inputs, means for driving said first input in accordance with said error signal, means for driving said second input in accordance with said reference signal and means for controlling said voltage across said field winding by said summed output.

3.    The improvement as defined in claim 2 including means for adjusting said preselected value.

4.    The improvement as defined in claim 3 wherein said means for controlling said voltage across said field winding in accordance with said reference signal includes  means for sensing the voltage across said field winding, means for creating a field voltage signal in accordance with said sensed voltage, means for adding said reference signal to said field voltage signal to create a feedback signal and means for controlling said voltage across said field winding by said feedback signal.

5. The improvement as defined in claim 2 wherein said means for controlling said voltage across said field winding in accordance with said reference signal includes means for sensing the voltage across said field winding, means for creating a field voltage signal in accordance with said sensed voltage, means for adding said reference signal to said field voltage signal to create a feedback signal and means for controlling said voltage across said field winding by said feedback signal.

6. The improvement as defined in claim 1 wherein said means for controlling said voltage across said field winding in accordance with said reference signal includes means for sensing the voltage across said field winding, means for creating a field voltage signal in accordance with said sensed voltage, means for adding said reference signal to said field voltage signal to create a feedback signal and means for controlling said voltage across said field winding by said feedback signal.

7. The improvement as defined in claim 6 including means for adjusting said preselected value.

8. The improvement as defined in claim 1 including means for adjusting said preselected value.

9. In a device for controlling a D.C. drive motor, said motor having an armature and a separately excited field winding, said control device including means for sensing current flow through said armature, means for creating an armature current signal indicative of said sensed armature current, means for creating a reference signal indicative of a desired speed of said motor, comparison means for creating an error signal indicative of the relationship between said armature current signal and said reference signal, means for controlling the voltage applied across said armature in accordance with said error signal and means responsive to said error signal for varying the voltage across said field winding in accordance with said error signal, means responsive to said error signal for varying the voltage across said field winding in accordance with said error signal when said error signal exceeds a preselected value, the improvement comprising: means for controlling the voltage across said field winding in accordance with said reference signal at least during a period when said error signal is below said preselected value.

10. The improvement as defined in claim 9 including a summing circuit with a summed output and first and second inputs, means for driving said first input in accordance with said error signal, means for driving said second input in accordance with said reference signal and means for controlling said voltage across said field winding by said summed output.

11. A method of controlling the D.C. drive motor of a battery powered motor vehicle having an on-board storage battery, said motor having an armature and a separately excited field winding, said method including the steps of:

(a) sensing current flow through said armature;

(b) creating an armature current signal indicative of said sensed armature current;

(c) creating a reference signal indicative of a desired speed of said vehicle;

(d) creating an error signal indicative of the relationship between said armature current signal and said reference signal;

(e) controlling the voltage applied across said armature in accordance with said error signal;

(f) carrying the voltage across the field winding in accordance with the error signal when the error signal exceeds a preselected value; and,

(g) controlling the voltage across the field winding in accordance with the reference signal at least during a period when said error signal is below said preselected value.

12.   The method as defined in claim 11 including the further steps of:

(h)   providing a summing circuit with a summed output and first and second inputs;

(i)   driving said first input in accordance with said error signal;

(j)   driving said second input in accordance with said reference signal; and,

(k)   controlling said voltage across said field winding by said summed output.


13.   In a device for controlling the D.C. drive motor of a battery powered motor vehicle having an on-board storage battery, said motor having an armature and a separately excited field winding, said control device including means for sensing current flow through said armature, means for creating an armature current signal indicative of said sensed armature current, means for creating a reference signal indicative of a desired speed of said vehicle, comparison means for creating an error signal indicative of the relationship between said armature current signal and said reference signal, means for controlling the voltage applied across said armature in accordance with said error signal and control means responsive to said error signal means for varying the voltage across said field winding in accordance with said error signal when said error signal exceeds a preselected value, the improvement comprising:  said control means having means for modifying said voltage across said field winding in accordance with said reference signal at least during a period when said error signal is below said preselected value.


14.   The improvement as defined in claim 13 wherein said modifying means is a summing circuit with a summed output and first and second inputs, means for driving said first input in accordance with said error signal, means for driving said second input in accordance with said reference signal and means for controlling said voltage across said field winding by said summed output.


15.   The improvement as defined in claim 13 wherein said modifying means operates at all levels of said error signal.

16.   In a device for controlling the D.C. drive motor of a battery powered motor vehicle having an on-board storage battery and an accelerator pedal, said motor having an armature and a separately excited field winding, said control device including means for sensing current flow through said armature, means for creating an armature current signal indicative of said sensed armature current, means for creating a reference signal indicative of a desired speed of said vehicle, comparison means for creating an error signal indicative of the relationship between said armature current signal and said reference signal, means for controlling the voltage applied across said armature in accordance with said error signal, the improvement comprising:  voltage control means for controlling the voltage across said field winding in response to said reference signal.

17.   The improvement as defined in claim 16 including means for modifying said voltage control means for operation in response to both said reference signal and said error signal.

18.   The improvement as defined in claim 17 wherein said modifying means is operative after said error signal exceeds a preselected value.

19.   The improvement as defined in claim 18 including means for adjusting said preselected value.

20.   The improvement as defined in claim 16 wherein said reference signal creating means includes means for sensing the position of the accelerator pedal of said vehicle.

21.   In a device for controlling the D.C. drive motor of a battery powered motor vehicle having an on-board storage battery, said motor having an armature and a separately excited field winding, said control device including means for sensing current flow through said armature, means for creating an armature current signal indicative of said sensed armature current, means for creating a reference signal indicative of a desired speed of said vehicle, comparison means for creating an error signal indicative of the relationship between said armature current signal and said reference signal, means for controlling the voltage applied across said armature in accordance with said error signal, the improvement comprising: field control means for controlling the voltage applied across said field winding in accordance with said reference signal.

22. The improvement as defined in claim 21 wherein said field control means is a circuit for creating a voltage control signal in response to said error signal and said reference signal at least after said error signal exceeds a preselected value.

23. The improvement as defined in claim 22 wherein said preselected value is adjustable.

24. The improvement as defined in claim 23 wherein said preselected value is adjusted to a value generally corresponding to a condition wherein said voltage across said armature is a maximum value.

25. The improvement as defined in claim 24 wherein said maximum value is generally the normal voltage of said on-board storage battery.

## FIG. I

## FIG. 2

FIG. 3
(CHARGE)

COOL

LOAD ZnCl

$Cl_2$ GAS

STORE

$Cl H_2O$

COOLED ELECTROLITE
ZnCl

COOL

FIG. 4

$\overline{V_A}$
464

ARMATURE
POWER
SWITCH

B+  B-

FIELD
DRIVE

$V_F+$
$V_F-$

W

FIG. 5

FIG. 6A

CURRENT FEEDBACK AMPLIFIER POWER DRIVE CIRCUIT

4.0V = 500A
1.5V = 0A
.5V = 100A

TO FIG. 6B

# FIG. 6B

FIG. 6C

FROM FIG. 6B

FIELD REDUCTION AMPLIFIER

FIELD INTERLOCK

FIELD DRIVE AMPLIFIER

TO FIG. 6E

TO FIG. 6D

## FIG. 6D

FROM FIG. 6C

TO FIG. 6E

252

248

250

142

**TEMPERATURE PROTECTION** +5V +12V D4 D3 254 TL TO DASH INDICATOR

R40 4.7K

Q2 C23 .1µf

T MOTOR PTC

+5V **OSCILLATOR** R91 250K

R63 23.7K

R64 26.7K

+5V

R67 4.7K

R65 100K

R70 50K  R92 220K  R93 470K

C24 .02µf

R66 42K

350

352 TO FIG. 6F

**5 VOLT POWER SUPPLY**

342

12V (IGN) R58 4.7 1/2W

+12V

C15 1µf

C14 100µf

340 Q6 REG IN OUT

+5V

C16 1µf

COM

**TACHOMETER INTERFACE** +12V

TACH.

R59 33K

D6

R60 100K

Q7

C17 10µf

R62 27K

TACH. OUTPUT TO DASHBOARD

R61 10K

0080278

FIG. 6E

COMPARATOR CIRCUIT

FIG. 6F

REVERSING LOGIC POWER DRIVE CIRCUIT

FIG. 6G

FIG. 6H

FIELD DRIVE CIRCUIT
(HEAT SINK AREA)

TO
(FIG. 4)

0080278

European Patent
Office

**EUROPEAN SEARCH REPORT**

Application number

EP 82 30 5815

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | IEEE TRANSACTIONS ON INDUSTRY APPLICATIONS, vol.IA-14, no.6, November/December 1978, NEW YORK (US) B.K. BOSE et al.: "A DC motor control system for electric vehicle drive", pages 565-572 * page 565, column 2, line 1 - page 566, column 1, line 9; figures 1,2 * | 1-25 | H 02 P 7/28 B 60 L 11/18 |
| Y | DE-A-1 926 980 (LICENTIA) * page 3, line 20 - page 5, line 25; figures 1-4 * | 1-25 | |
| A | US-A-4 247 807 (GENERAL ELECTRIC) * column 4, lines 39-59; figure 2 * | 1 | |
| A | GB-A-2 040 085 (HITACHI) * page 2, line 56 - page 3, line 5; figure 1 * | 1 | TECHNICAL FIELDS SEARCHED (Int. Cl. ³) H 02 P B 60 L |
| A,D | US-A-3 818 292 (ENERGY DEVELOPMENT) | | |
| A,D | FR-A-2 302 619 (LUCAS) | | |
| A,D | US-A-3 935 024 (ENERGY DEVELOPMENT) | | |

The present search report has been drawn up for all claims

| Place of search | Date of completion of the search | Examiner |
|---|---|---|
| THE HAGUE | 10-02-1983 | HOUILLON J.C.P.L. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82